# EUROPEAN PATENT SPECIFICATION

(11) **EP 2 737 265 B1**
(45) Date of publication and mention of the grant of the patent: **10.01.2018**
(21) Application number: 12751162.4
(22) Date of filing: 25.07.2012
(51) Int. Cl.: F25B 1/10, F25B 9/00, F25B 41/00, F25B 49/02

(54) **TEMPERATURE CONTROL LOGIC FOR REFRIGERATION SYSTEM**
TEMPERATURSTEUERLOGIK FÜR EIN KÜHLSYSTEM
LOGIQUE DE COMMANDE DE LA TEMPÉRATURE POUR SYSTÈME DE RÉFRIGÉRATION

(30) Priority: 26.07.2011 US 201161511721 P
(43) Date of publication of application: 04.06.2014
(73) Proprietor: Carrier Corporation, Farmington, CT 06034 (US)
(72) Inventor: SUN, Jian, Fayetteville, New York 13066 (US); HUFF, Hans-Joachim, 55118 Mainz (DE); SHAPIRO, Aryn, Syracuse, New York 13202 (US); HOFSDAL, Gilbert B., Chittenango, New York 13037 (US); GAN, Mingfei, Manlius, New York 13104-2433 (US); LI, Wenhua, Manlius, New York 13104 (US)
(74) Representative: Schmitt-Nilson Schraud Waibel Wohlfrom Patentanwälte Partnerschaft mbB
(86) International application number: PCT/US2012/048096
(87) International publication number: WO 2013/016403

(56) References cited:
- EP-A2- 0 969 257
- WO-A1-2009/061804
- WO-A1-2009/082405
- WO-A1-2009/140372
- US-A- 5 867 998
- US-A- 6 044 651
- MINDS G ET AL: "REEFER CONTAINER UNIT MED CO2", ANNOUNCEMENT MILJOSTYRELSEN, XX, XX, no. 655, 26 June 2001 (2001-06-26), pages A/B,02-28, XP001169093,

## Description

### BACKGROUND OF THE INVENTION

Embodiments relate generally to refrigerant vapor compression systems and, more particularly, to temperature control logic for a refrigeration system.

Refrigerant vapor compression systems are well known in the art and are commonly used for conditioning air to be supplied to a climate controlled comfort zone within a residence, office building, hospital, school, restaurant or other facility. Refrigerant vapor compression systems are also commonly used in refrigerating air supplied to display cases, merchandisers, freezer cabinets, cold rooms or other perishable/frozen product storage areas in commercial establishments.

Refrigerant vapor compression systems are also commonly used in transport refrigeration systems for refrigerating air supplied to a temperature controlled cargo space of a truck, trailer, container or the like for transporting perishable/frozen items by truck, rail, ship or intermodal means. Refrigerant vapor compression systems used in connection with transport refrigeration systems are generally subject to more stringent operating conditions due to the wide range of operating load conditions and the wide range of outdoor ambient conditions over which the refrigerant vapor compression system operates to maintain product within the cargo space at a desired temperature. The desired temperature at which the cargo needs to be controlled can also vary over a wide range depending on the nature of cargo to be preserved. The refrigerant vapor compression system not only needs sufficient capacity to rapidly pull down the temperature of product loaded into the cargo space at ambient temperature, but also operate efficiently at low load when maintaining a stable product temperature during transport. Additionally, transport refrigerant vapor compression systems are subject to vibration and movements not experienced by stationary refrigerant vapor compression systems.

When used to cool perishable or frozen items under transport, a transport refrigeration system often needs to control the temperature in the cargo space to be within a tight temperature band. Maintaining the cargo space in the temperature band can result in erratic operation of the refrigeration system, due to repeatedly going above and below the temperature band. As such, improvements in controlling the temperature of items more smoothly would be well received in the art.

WO 2009/061804 A1 discloses a refrigeration system for a transport refrigeration unit and a method of operating the refrigeration system for cooling a temperature controlled cargo space are disclosed. The refrigeration system includes a primary refrigerant circuit including a refrigerant compression device, a motor for driving the compression device; a variable speed drive for varying the speed of operation of the compression device; and a controller operatively associated with the variable speed drive and the compression device. The controller controls the cooling capacity of the refrigeration system by selectively controlling the speed of said compression device in a first continuous run mode of operation and by selectively powering on and powering off said compression device in a first cycling mode of operation.

### BRIEF DESCRIPTION OF THE INVENTION

A refrigeration system according to the invention has the features of claim 1.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
Figure 1 is a schematic diagram illustrating an exemplary embodiment of a refrigerant vapor compression system; and
Figure 2 is depicts exemplary control operations for the system of Figure 1.

The detailed description explains embodiments of the invention, together with advantages and features, by way of example with reference to the drawings.

### DETAILED DESCRIPTION OF THE INVENTION

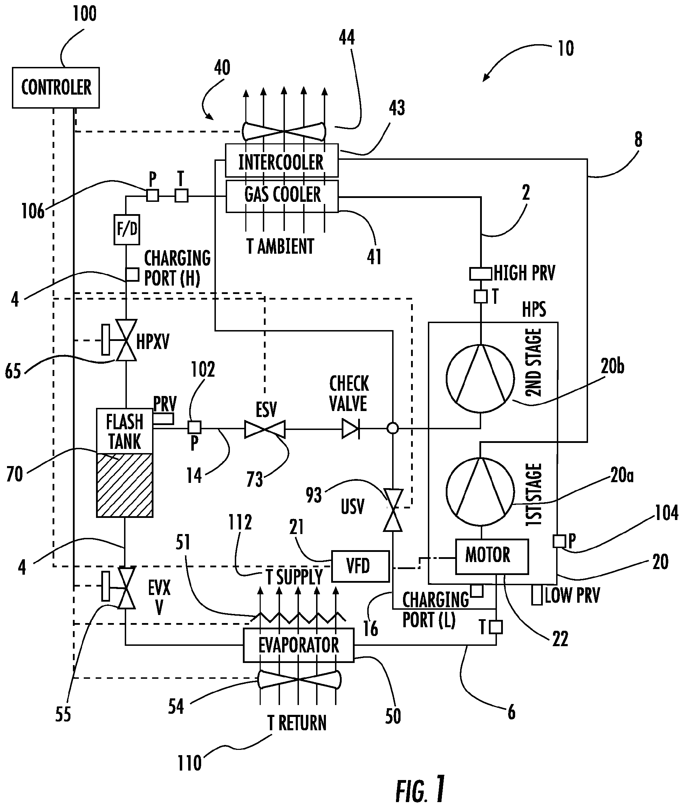

Figure 1 depicts an exemplary embodiment of a refrigerant vapor compression system 10 suitable for use in a transport refrigeration system for refrigerating the air or other gaseous atmosphere within the temperature controlled cargo space of a truck, trailer, container or the like for transporting perishable/frozen goods. The refrigerant vapor compression system 10 is also suitable for use in conditioning air to be supplied to a climate controlled comfort zone within a residence, office building, hospital, school, restaurant or other facility. The refrigerant vapor compression system could also be employed in refrigerating air supplied to display cases, merchandisers, freezer cabinets, cold rooms or other perishable/frozen product storage areas in commercial establishments.

The refrigerant vapor compression system 10 is particularly adapted for operation in a transcritical cycle with a low critical temperature refrigerant, such as for example, but not limited to, carbon dioxide. The refrigerant vapor compression system 10 includes a multi-stage compressor 20, a refrigerant heat rejecting heat exchanger 40, a refrigerant heat absorbing heat exchanger 50, also referred to herein as an evaporator, and a primary (low pressure) expansion device 55, such as for example an electronic expansion valve or a thermostatic expansion valve, operatively associated with the evaporator 50, with refrigerant lines 2, 4 and 6 connecting the aforementioned components in a primary refrigerant circuit. Primary expansion device 55 may be a stepper valve being positionable in a multitude of operational positions.

Heat rejecting heat exchanger 40 includes a gas cooler 41 and an intercooler 43, in a heat exchange relationship with a cooling medium, such as, but not limited to, ambient air. Fan 44 draws air over the gas cooler 41 and the intercooler 43 to remove heat from refrigerant passing through the gas cooler 41 and/or the intercooler 43. Fan 44 is controllable and may be a two-speed fan operating at a first (e.g., low) and second (e.g., high) speed. Alternatively, fan 44 is a variable speed fan having a multitude of fan speeds controllable by electronic drive signals.

The refrigerant heat absorption heat exchanger 50 serves as an evaporator wherein liquid refrigerant is passed in heat exchange relationship with a fluid to be cooled, most commonly air, drawn from and to be returned to a temperature controlled environment, such as the cargo box of a refrigerated transport truck, trailer or container, or a display case, merchandiser, freezer cabinet, cold room or other perishable/frozen product storage area in a commercial establishment, or to a climate controlled comfort zone within a residence, office building, hospital, school, restaurant or other facility. In the depicted embodiments, the refrigerant heat absorbing heat exchanger 50 comprises a finned tube heat exchanger through which refrigerant passes in heat exchange relationship with air drawn from and returned to the refrigerated cargo box by the evaporator fan(s) 54 associated with the evaporator 50. The finned tube heat exchanger may comprise, for example, a fin and round tube heat exchange coil or a fin and micro-channel flat tube heat exchanger. Fan 54 is controllable and maybe a two-speed fan operating at a first (e.g., low) and second (e.g., high) speed. Alternatively, fan 54 is a variable speed fan having a multitude of fan speeds controllable by electronic drive signals.

A heater 51 is positioned near evaporator 50 to introduce heat to the space to be cooled in certain situations. Heater 51 may be an electrical resistive heater capable of on-off control or modulated control under which a multitude of heat outputs may be achieved in response to control signals from controller 100.

The compression device 20 functions to compress the refrigerant and to circulate refrigerant through the primary refrigerant circuit as will be discussed in further detail hereinafter. The compression device 20 may comprise a single multiple stage refrigerant compressor, such as for example a scroll compressor, a screw compressor or a reciprocating compressor, disposed in the primary refrigerant circuit and having a first compression stage 20a and a second compression stage 20b. Alternatively, the compression device 20 may comprise a pair of independent compressors 20a and 20b. In the independent compressor embodiment, the compressors 20a and 20b may be scroll compressors, screw compressors, reciprocating compressors, rotary compressors or any other type of compressor or a combination of any such compressors. In the first stage 20a of two-stage variable speed compressor 20, refrigerant is compressed from suction pressure to mid-stage pressure. The refrigerant is then cooled at intercooler 43 via refrigerant line 8. Then the refrigerant enters the second stage compressor 20b via refrigerant line 16, mixed with refrigerant from flash tank 70 or not depending on whether economizer valve 73 is opened or closed. The refrigerant is compressed to discharge pressure in second stage compressor 20b and then cooled in a gas cooler 41. Motor 22 drives compressors 20a and 20b. Motor 22 may, but need not be, a variable frequency drive (VFD) motor capable of operating at a number of speeds depending upon operational requirements as described in further detail herein.

Additionally, the refrigerant vapor compression system 10 includes a flash tank 70 interdisposed in refrigerant line 4 of the primary refrigerant circuit downstream with respect to refrigerant flow of the gas cooler 41 and upstream with respect to refrigerant flow of the evaporator 50. A secondary (high pressure) expansion device 65 is interdisposed in refrigerant line 4 in operative association with and upstream of the flash tank 70. The secondary expansion device 65 may be an electronic expansion valve or a fixed orifice expansion device. Secondary expansion device 65 may be a stepper valve being positionable in a multitude of operational positions. Refrigerant traversing the secondary expansion device 65 is expanded to a lower pressure sufficient to establish a mixture of refrigerant in a vapor state and refrigerant in a liquid state. The flash tank 70 defines a separation chamber wherein refrigerant in the liquid state collects in a lower portion of the separation chamber and refrigerant in the vapor state collects in the portion of the separation chamber above the liquid refrigerant.

Liquid refrigerant collecting in the lower portion of the flash tank 70 passes therefrom through refrigerant line 4 and traverses the primary expansion device 55 interdisposed in refrigerant line 4 upstream with respect to refrigerant flow of the evaporator 50. As this liquid refrigerant traverses the primary expansion device 55, it expands to a lower pressure and temperature before entering the evaporator 50. The evaporator 50 constitutes a refrigerant evaporating heat exchanger through which expanded refrigerant passes in heat exchange relationship with the air to be cooled, whereby the refrigerant is vaporized and typically superheated. As in conventional practice, the primary expansion device 55 meters the refrigerant flow through the refrigerant line 4 to maintain a desired level of superheat in the refrigerant vapor leaving the evaporator 50 to ensure that no liquid is present in the refrigerant leaving the evaporator 50. The low pressure refrigerant vapor leaving the evaporator 50 returns through refrigerant line 6 to the suction port of the first compression stage 20a of the compression device 20.

The refrigerant vapor compression system 10 also includes a refrigerant vapor injection line 14. The refrigerant vapor injection line 14 establishes refrigerant flow communication between an upper portion of the separation chamber of the flash tank 70 and the second stage 20b of the compressor 20. The refrigerant vapor injection line 14 includes an economizer valve 73 that is opened under certain operational conditions as described in further detail herein. The economizer valve 73 may be a solenoid valve being positionable as opened or closed. Alternatively, economizer valve 73 is a stepper valve being positionable in a multitude of operational positions.

The refrigerant vapor compression system 10 may also include a compressor unload bypass line 16. The discharge of first stage 20a of compressor 20 is coupled to intercooler 43 with refrigerant line 8. Unload bypass line 16 couples the outlet of the intercooler 43 to the suction portion of first compressor stage 20a through an unload vale 93. The unload valve 93 may be a solenoid valve being positionable as opened or closed. Alternatively, unload valve 93 is a stepper valve being positionable in a multitude of operational positions.

The refrigerant vapor compression system 10 includes a controller 100. The controller 100 controls operation of the various flow control valves 73 and 93 to selectively direct refrigerant flow through the refrigerant vapor injection line 14 and the unload bypass line 16, but also may control operation of the electronic expansion devices 55 and 65, motor 22 of compressor 20, and the fans 44 and 54. As in conventional practice, in addition to monitoring ambient conditions, the controller 100 also monitors various operating parameters by means of various sensors operatively associated with the controller 100 and disposed at selected locations throughout the system. For example, in the exemplary embodiment depicted in Figure 1, a pressure sensor 102 is disposed in operative association with the flash tank 70 to sense the pressure within the flash tank 70, a pressure sensor 104 is provided to sense the refrigerant suction pressure, and a pressure sensor 106 is provided to sense refrigerant discharge pressure. The pressure sensors 102, 104, 106 may be conventional pressure sensors, such as for example, pressure transducers. Further, temperature across the evaporator is measured by a return temperature sensor 110 and a supply temperature sensor 112. The temperature sensors 110 and 112 may be conventional temperature sensors, such as for example, thermocouples or thermistors.

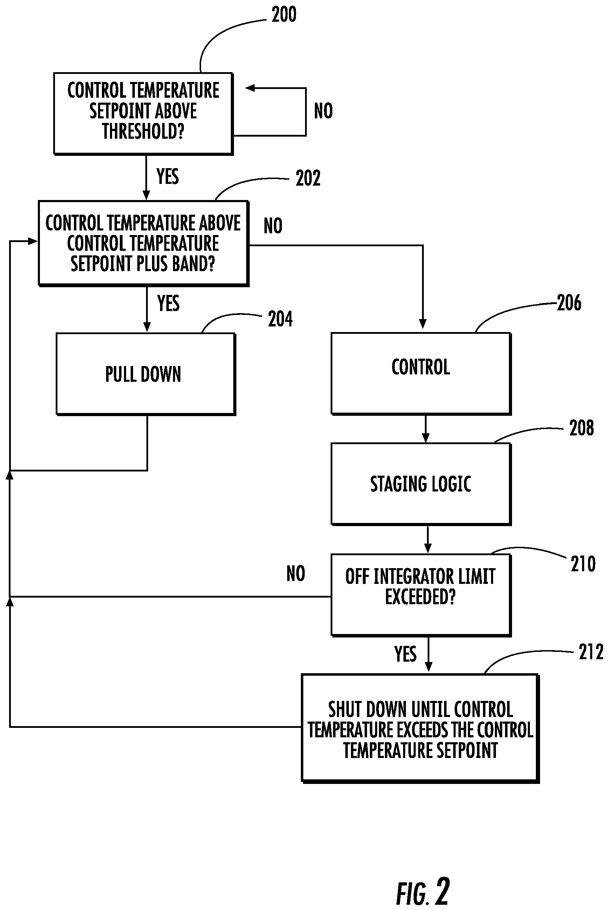

Embodiments of the invention include control logic implemented by controller 100 to provide for smooth operation of the refrigeration system 10 when maintaining temperature within a band (e.g., perishable or frozen) for items in transport. Figure 2 is a flowchart of exemplary control logic implemented by controller 100.

At 200, the controller 100 determines if the control temperature setpoint above a threshold temperature. The control temperature setpoint is the desired temperature for the space to be cooled. If the control temperature setpoint is below the threshold (e.g., 14.4 degrees F/ -9.7 degrees C), then the system need not execute control logic.

If the control temperature setpoint is above the threshold, flow proceeds to 202 where the controller 100 determines if the control temperature is above the control temperature setpoint plus a band. The control temperature is the fluid, most commonly air, temperature leaving from the refrigerant heat absorption heat exchanger 50 as indicated by temperature sensor 112. The band is relatively narrow (e.g., +/- 0.36 degrees F / +/- 0.2 degrees C) temperature band about the control temperature setpoint. If at 202, the control temperature is above the control temperature setpoint plus the band, this indicates that the space to be cooled needs to be cooled using high capacity cooling. In this condition, flow proceeds to 204 where a pulldown mode is entered.

In the pulldown mode 204, the goal is to cool the space housing the able item. Controller 100 commands the frequency of VFD drive signals to motor 22 to be held at full speed (i.e., 100%). Secondary expansion device 65 is controlled to control the discharge pressure at compressor 20 as indicated by pressure sensor 106 to achieve a desired discharge pressure. The desired discharge pressure is calculated based on optimizing the system efficiency and/or system capacity at the current operating condition. The primary expansion device 55 is controlled to control the evaporator 50 superheat temperature. Superheat may be determined based on temperature at the evaporator 50 and the suction pressure from pressure sensor 104. Fans 54 and 44 are controlled by controller 100 to be set at a high speed. Controller 100 controls the economizer valve 73 to be open or closed based on flash tank 70 pressure as indicated by pressure sensor 102.

The pulldown mode 204 continues until the control temperature is within the band of the control temperature setpoint. At this point, flow proceeds from 202 to control mode 206. In the control mode 206, three control loops (e.g., PID) are used in the refrigeration system 10. First, compressor 20 speed is adjusted to maintain the control temperature at the setpoint. Second, discharge pressure of compressor 20 is controlled by stepwise control of the secondary expansion device 55 to achieve a desired discharge pressure. The desired discharge pressure is calculated based on optimizing the system efficiency at the current operating condition. Third, evaporator 50 superheat temperature is controlled by stepwise control of secondary expansion device 65.

In exemplary embodiments, the controller 100 commands the frequency of the VFD drive signals to motor 22 to control the control temperature of the space to be cooled. Secondary expansion device 65 is controlled to control the discharge pressure at compressor 20 as indicated by pressure sensor 106. The primary expansion device 55 is controlled to control the evaporator 50 superheat temperature. Superheat may be determined based on temperature at the evaporator 50 and the suction pressure from pressure sensor 104. Fans 54 and 44 are controlled by controller 100 to be set at a high speed. Controller 100 controls the economizer valve 73 to be open or closed based on flash tank 70 pressure as indicated by pressure sensor 102. Heater 51 may also be used to keep the control temperature within the band about the control temperature setpoint.

In order to improve system efficiency and reduce likelihood of system shutdown, staging logic mode 208 is used to modify the refrigeration system capacity so that the system can continue running while meeting relatively low cooling demand. It is desirable that the system 10 meet low cooling requirements without shutting down, as excessive shutdown and startup results in more erratic control temperatures. Startup also presents concerns with compressor flooding.

The staging logic mode 208 is implemented by controller 100, and allots control points to reduce capacity such that the refrigerant system 10 should not shutdown, and persists the control temperature within the band with minimal power consumption. Each reduction in capacity is reversible and iterative and may include one or more of the following. The speed of fan 44 may be modulated to reduce capacity. The economizer valve 73 may be closed, and the unloader valve 93 opened to reduce capacity. The VFD drive signal frequency to motor 22 may be held at a VFD minimum (e.g., 15%) to reduce capacity. Fan 44 may be modulated to control temperature. One, all, or any number of these capacity reducing measures may be employed to allow the refrigeration system 10 to run during periods of low cooling demand. Further, heater 51 may also be used to keep the control temperature within the band about the control temperature setpoint when low capacity modes still exceed cooling demand.

An off integrator 210 is used to determine if shutting down the refrigeration system 10 is needed. The off integrator 210 is implemented by controller 100 and tracks the amount of error accumulated by the system when the control temperature is below the control temperature setpoint. The off integrator sums the difference between the control temperature and the control temperature setpoint over time. If this summed difference exceeds an off integrator limit while outside of an acceptable control range, the refrigeration system 10 will enter a shut down mode at 212 until the control temperature exceeds the control temperature setpoint plus the band, after which system 10 will re-enter a startup sequence.

At 212, If the system 10 is off and the control temperature is below the control temperature setpoint, then the system 10 will not operate the refrigeration system, and the evaporator fan 54 will operate according to control temperature setpoint. Additionally, if the control temperature is below the control temperature setpoint and beyond the control range, the heater 51 may be used to control temperature.

With this control logic, the control temperature can be smoothly maintained within the temperature band about the control temperature setpoint, particularly when system capacity is reduced to such low levels that the refrigerant system should shutdown normally. The staging logic allots control points to reduce capacity such that the refrigerant system 10 should not shutdown and persists the control temperature within the band with minimal power usage.

While the invention has been described in detail in connection with only a limited number of embodiments, it should be readily understood that the invention is not limited to such disclosed embodiments. While various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A refrigeration system (10) comprising:
a compressor (20) having a first stage (20a) and a second stage (20b);
a motor (22) driving the compressor (20);
a heat rejecting heat exchanger (40) having a fan (44) drawing ambient fluid over the heat rejecting heat exchanger (40), the heat rejecting heat exchanger (40) including an intercooler and a gas cooler (41), the intercooler (43) coupled to an outlet of the first stage (20a) and the gas cooler (41) coupled to an outlet of the second stage (20b);
a flash tank (70) coupled to an outlet of the gas cooler (41);
a primary expansion device (55) coupled to an outlet of the flash tank (70);
a heat absorbing heat exchanger (50) coupled to an outlet of the primary expansion device (55), an outlet of the heat absorbing heat exchanger (50) coupled to the suction port of the first stage (20a);
an economizer valve (73) coupling the flash tank (70) to an inlet of the second stage (20b);
an unload valve coupling (93) an outlet of the intercooler (43) to the suction port of the first stage (20a); and
a controller (100) which is configured for for implementing a pulldown mode for cooling a space to a control temperature within a band of a control temperature setpoint, a control mode for maintaining the control temperature within the band of the control temperature setpoint and a staging logic mode for reducing system capacity while maintaining the control temperature within the band range of the control temperature setpoint,
wherein the staging logic mode includes closing the economizer valve (73) and opening the unload valve (93).

2. The refrigeration system (10) of claim 1 further comprising:
a secondary expansion device (65) positioned between the gas cooler (41) and the flash tank (70);
the pulldown mode includes controlling the secondary expansion device (65) to control discharge pressure at the compressor (20).

3. The refrigeration system (10) of claim 1 wherein:
the pulldown mode includes controlling the primary expansion device (55) to control the heat absorbing heat exchanger (50) superheat temperature.

4. The refrigeration system (10) of claim 1 wherein:
the control mode includes controlling drive signals to the motor (22) to control the control temperature.

5. The refrigeration system (10) of claim 4 wherein:
the motor (22) is a variable frequency drive (VFD) motor.

6. The refrigeration system (10) of claim 1 further comprising:
a secondary expansion device (65) positioned between the gas cooler (41) and the flash tank (70);
the control mode includes controlling the secondary expansion device (65) to control discharge pressure at the compressor (20).

7. The refrigeration system (10) of claim 1 wherein:
the control mode includes controlling the primary expansion device (55) to control the heat absorbing heat exchanger (50) superheat temperature.

8. The refrigeration system (10) of claim 1 further comprising:
a heater (51);
the control mode includes controlling the heater (51) to maintain the control temperature within the band of the control temperature setpoint.

9. The refrigeration system (10) of claim 1 wherein:
the staging logic mode includes modulating the fan (44) to reduce system capacity.

10. The refrigeration system (10) of claim 1 wherein:
the staging logic mode includes modulating the fan (44) to control the control temperature.

11. The refrigeration system (10) of claim 1 wherein:
the controller (100) implements an off integrator, the off integrator tracking an amount of error accumulated by the system when the control temperature is below the control temperature setpoint.

12. The refrigeration system (10) of claim 11 wherein:
the off integrator sums the difference between the control temperature and the control temperature setpoint over time.

13. The refrigeration system (10) of claim 12 wherein:
wherein when the sum difference exceeds an off integrator limit, the controller (100) implements a shut down mode.

## Patentansprüche

1. Kühlsystem (10), umfassend:
einen Verdichter (20) mit einer ersten Stufe (20a) und einer zweiten Stufe (20b);
einen Motor (22), der den Verdichter (20) antreibt;
einen wärmeabgebenden Wärmetauscher (40) mit einem Ventilator (44), der Umgebungsfluid über den wärmeabgebenden Wärmetauscher (40) zieht, wobei der wärmeabgebende Wärmetauscher (40) einen Zwischenkühler und einen Gaskühler (41) einschließt, wobei der Zwischenkühler (43) mit einem Auslass der ersten Stufe (20a) gekoppelt ist und der Gaskühler (41) mit einem Auslass der zweiten Stufe (20b) gekoppelt ist;
einen Flashtank (70), der mit einem Auslass des Gaskühlers (41) gekoppelt ist;
eine primäre Expansionseinrichtung (55), die mit einem Auslass des Flashtanks (70) gekoppelt ist;
einen wärmeabsorbierenden Wärmetauscher (50), der mit einem Auslass der primären Expansionseinrichtung (55) gekoppelt ist, wobei ein Auslass des wärmeabsorbierenden Wärmetauschers (50) mit der Ansaugöffnung der ersten Stufe (20a) gekoppelt ist;
ein Economizer-Ventil (73), das den Flashtank (70) mit einem Einlass der zweiten Stufe (20b) koppelt;
ein Entladeventil (93), das einen Auslass des Zwischenkühlers (43) mit der Ansaugöffnung der ersten Stufe (20a) koppelt; und
eine Steuerung (100), die konfiguriert ist zum Implementieren eines Pulldown-Modus zum Kühlen eines Raumes auf eine Steuertemperatur innerhalb eines Bandes eines Steuertemperatur-Vorgabewertes, eines Steuermodus zum Erhalten der Steuertemperatur innerhalb des Bandes des Steuertemperatur-Vorgabewertes und eines Staging-Logikmodus zum Reduzieren der Systemkapazität, während die Steuertemperatur innerhalb der Bandbreite des Steuertemperatur-Vorgabewertes gehalten wird,
wobei der Staging-Logikmodus ein Schließen des Economizer-Ventils (73) und ein Öffnen des Entladeventils (93) beinhaltet.

2. Kühlsystem (10) nach Anspruch 1 weiter umfassend:
eine sekundäre Expansionseinrichtung (65), die zwischen dem Gaskühler (41) und dem Flashtank (70) angeordnet ist;
wobei der Pulldown-Modus ein Steuern der sekundären Expansionseinrichtung (65) beinhaltet, um einen Ausgangsdruck an dem Verdichter (20) zu steuern.

3. Kühlsystem (10) nach Anspruch 1, wobei:
der Pulldown-Modus ein Steuern der primären Expansionseinrichtung (55) beinhaltet, um die Überhitzungstemperatur des wärmeabsorbierenden Wärmetauschers (50) zu steuern.

4. Kühlsystem (10) nach Anspruch 1, wobei:
der Steuermodus ein Steuern von Antriebsignalen zu dem Motor (22) beinhaltet, um die Steuertemperatur zu steuern.

5. Kühlsystem (10) nach Anspruch 4, wobei:
der Motor (22) ein Antriebsmotor mit variabler Frequenz (VFD) ist.

6. Kühlsystem (10) nach Anspruch 1 weiter umfassend:
eine sekundäre Expansionseinrichtung (65), die zwischen dem Gaskühler (41) und dem Flashtank (70) angeordnet ist;
wobei der Steuermodus ein Steuern der sekundären Expansionseinrichtung (65) beinhaltet, um den Ausgangsdruck an dem Verdichter (20) zu steuern.

7. Kühlsystem (10) nach Anspruch 1, wobei:
der Steuermodus ein Steuern der primären Expansionseinrichtung (55) beinhaltet, um die Überhitzungstemperatur des wärmeabsorbierenden Wärmetauschers (50) zu steuern.

8. Kühlsystem (10) nach Anspruch 1 weiter umfassend:
eine Heizeinrichtung (51);
wobei der Steuermodus ein Steuern der Heizeinrichtung (51) beinhaltet, um die Steuertemperatur innerhalb des Bandes des Steuertemperatur-Vorgabewertes zu halten.

9. Kühlsystem (10) nach Anspruch 1, wobei:
der Staging-Logikmodus ein Modulieren des Ventilators (44) beinhaltet, um die Systemkapazität zu reduzieren.

10. Kühlsystem (10) nach Anspruch 1, wobei:
der Staging-Logikmodus ein Modulieren des Ventilators (44) beinhaltet, um die Steuertemperatur zu steuern.

11. Kühlsystem (10) nach Anspruch 1, wobei:
die Steuerung (100) einen Aus-Integrator implementiert, wobei der Aus-Integrator eine Menge von durch das System angesammelte Fehler verfolgt, wenn die Steuertemperatur unter dem Steuertemperatur-Vorgabewert liegt.

12. Kühlsystem (10) nach Anspruch 11, wobei:
der Aus-Integrator die Differenz zwischen der Steuertemperatur und dem Steuertemperatur-Vorgabewert über einen Zeitraum zusammenzählt.

13. Kühlsystem (10) nach Anspruch 12, wobei:
wobei die Steuerung (100) einen Abschaltemodus implementiert, wenn die Summendifferenz eine Grenze des Aus-Integrators überschreitet.

## Revendications

1. Système de réfrigération (10), comprenant :
un compresseur (20) ayant un premier étage (20a) et un second étage (20b) ;
un moteur (22) entraînant le compresseur (20) ;
un échangeur de chaleur à rejet de chaleur (40) ayant un ventilateur (44) aspirant le fluide ambiant par-dessus l'échangeur de chaleur à rejet de chaleur (40), l'échangeur de chaleur à rejet de chaleur (40) comprenant un refroidisseur intermédiaire et un refroidisseur de gaz (41), le refroidisseur intermédiaire (43) couplé à une sortie du premier étage (20a) et le refroidisseur de gaz (41) couplé à une sortie du deuxième étage (20b) ;
un ballon de détente (70) couplé à une sortie du refroidisseur de gaz (41) ;
un détendeur principal (55) couplé à une sortie du ballon de détente (70) ;
un échangeur de chaleur à absorption de chaleur (50) couplé à une sortie du détendeur principal (55), une sortie de l'échangeur de chaleur à absorption de chaleur (50) couplé à l'orifice d'aspiration du premier étage (20a) ;
un économiseur (73) couplant le ballon de détente (70) à une entrée du deuxième étage (20b) ;
une soupape de décharge couplant (93) une sortie du refroidisseur intermédiaire (43) à l'orifice d'aspiration du premier étage (20a) ; et
un dispositif de commande (100) qui est configuré pour mettre en oeuvre un mode de tirage permettant de refroidir un espace à une température de commande dans une plage d'une consigne de température de commande, un mode de commande pour maintenir la température de commande dans la plage de la consigne de température de commande et un mode de logique d'étagement pour réduire la capacité du système tout en maintenant la température de commande dans la plage de la consigne de température de commande,
dans lequel le mode de logique d'étagement comprend la fermeture de l'économiseur (73) et l'ouverture de la soupape de décharge (93).

2. Système de réfrigération (10) selon la revendication 1, comprenant en outre :
un détenteur secondaire (65) positionné entre le refroidisseur de gaz (41) et le ballon de détente (70) ;
le mode de tirage comprend la commande du détendeur secondaire (65) pour commander la pression de décharge au niveau du compresseur (20).

3. Système de réfrigération (10) selon la revendication 1, dans lequel :
le mode de tirage comprend la commande du détendeur principal (55) pour commander la température de surchauffe de l'échangeur de chaleur absorbant la chaleur (50).

4. Système de réfrigération (10) selon la revendication 1, dans lequel :
le mode de commande comprend la commande de signaux de commande au moteur (22) pour commander la température de commande.

5. Système de réfrigération (10) selon la revendication 4, dans lequel :
le moteur (22) est un moteur à variateur de fréquence (VFD).

6. Système de réfrigération (10) selon la revendication 1, comprenant en outre :
un détenteur secondaire (65) positionné entre le refroidisseur de gaz (41) et le ballon de détente (70) ;
le mode de commande comprend la commande du détendeur secondaire (65) pour commander la pression de décharge au niveau du compresseur (20).

7. Système de réfrigération (10) selon la revendication 1, dans lequel :
le mode de commande comprend la commande du détendeur principal (55) pour commander la température de surchauffe de l'échangeur de chaleur absorbant la chaleur (50).

8. Système de réfrigération (10) selon la revendication 1, comprenant en outre :
un chauffage (51) ;
le mode de commande comprend la commande du chauffage (51) pour maintenir la température de commande dans la plage de consigne de la température de commande.

9. Système de réfrigération (10) selon la revendication 1, dans lequel :
le mode de logique d'étagement comprend la modulation du ventilateur (44) pour réduire la capacité du système.

10. Système de réfrigération (10) selon la revendication 1, dans lequel :
le mode de logique d'étagement comprend la modulation du ventilateur (44) pour commander la température de commande.

11. Système de réfrigération (10) selon la revendication 1, dans lequel :
le dispositif de commande (100) met en oeuvre un intégrateur d'arrêt, l'intégrateur d'arrêt effectuant le suivi d'une quantité d'erreur accumulée par le système lorsque la température de commande est inférieure à la consigne de la température de commande.

12. Système de réfrigération (10) selon la revendication 11, dans lequel :
l'intégrateur d'arrêt additionne la différence entre la température de commande et la consigne de la température de commande dans le temps.

13. Système de réfrigération (10) selon la revendication 12, dans lequel :
dans lequel, lorsque la différence de somme dépasse une limite d'intégrateur d'arrêt, le dispositif de commande (100) met en oeuvre un mode d'extinction.
